# EUROPEAN PATENT APPLICATION

(11) **EP 2 562 640 A1**
(43) Date of publication of application: **27.02.2013**
(21) Application number: 10852732.6
(22) Date of filing: 07.09.2010
(51) Int. Cl.: G06F 9/44

(54) **METHOD AND DEVICE FOR PROCESSING WIDGET SYSTEM APPEARANCE**

(30) Priority: 09.06.2010 CN 201010195562
(71) Applicant: ZTE Corporation, Shenzhen, Guangdong 518057 (CN)
(72) Inventor: XIAO, Fei, Shenzhen Guangdong 518057 (CN)
(74) Representative: Jansen, Cornelis Marinus
(86) International application number: PCT/CN2010/076698
(87) International publication number: WO 2011/153740

(57) **Abstract**

A method and a device for processing the widget system appearance is disclosed, the method can acquire current desktop attribute information of an operating system when a widget engine is started or a set time is up; and look up a pre-configured matching relationship table, acquire a parameter of the widget system appearance corresponding to the desktop attribute information, and set the widget system appearance based on the parameter. The device includes: a desktop attribute information acquiring unit and an appearance setting unit. The method and device can greatly improve user experience by adaptively adjusting the widget system appearance according to desktop attribute information set by a user.

## Description

### TECHNICAL FIELD

The disclosure relates to the field of Internet technology, in particular to a method and a device for processing a widget system appearance.

### BACKGROUND

A widget is a small segment of code capable of being executed on any HyperText Markup Language (HTML) or JavaScript based Web page and is a small application of Internet, possibly with the representation of video, map, news, flash game and the like. Initially, the widget was implemented on a Media Access Control (MAC) Operating System (OS). It consists of a widget engine and a widget application, and can greatly improve desktop application and network operation. The widget engine is a platform on which the widget application runs, and provides a capability of accessing a network through an ajax technology. Widget applications with various different functions can be run on this engine after a widget User Application (UA) is installed. With the development of the widget, the widget has owned a cross-platform capability and has appeared on Windows, MAC OS, Linux and various mobile phone platforms. Meanwhile, as a hotspot of an Internet application, the widget has attracted more and more companies, such as big companies like Apple, Microsoft, Yahoo, Google and the like.

With the widget application acting as a small application emerging on the Internet, the concept of the widget was already prevailing on the Internet since 2007. The representation of the widget has developed from an initial desktop widget and web widget to a terminal device, such as mobile phone widget and television widget since 2008. A common thought is to introduce some characteristics of the desktop widget and web widget to the terminal device.

To take the lead in the development of the widget, various websites and manufacturers release their own widget standards. Since 2006, a W3C has started to formulate a uniform widget standard and successively releases a series of specifications, but such specifications are still in a draft phrase and only oriented to a desktop widget system. With the presence of the widget on the terminal device, some manufacturers further started to formulate the widget specifications on mobile terminals, for example, a BONDI specification formulated by an Open Mobile Terminal Platform (OMPT), and a JIL specification formulated with the participation of China Mobile. Such specifications support a local application of the widget on the terminal devices.

However, the current industrial widget standards only formulate a widget suffix, a packet format, a configuration file, a JavaScript Application Program Interface (API), a security policy and the like, without relating to a widget appearance and user experience.

### SUMMARY

The disclosure provides a method and a device for processing a widget system appearance to solve the problem that, in the related art, the widget system appearance cannot be adaptively adjusted according to a desktop attribute set by a user.

To solve the problem above, the technical solution of the disclosure is implemented as follows.

A method for processing the widget system appearance is provided, which may include:
current desktop attribute information of an operating system is acquired; and
a pre-configured matching relationship table is looked up, a parameter of a widget system appearance corresponding to the current desktop attribute information of the operating system is acquired, and the widget system appearance is set based on the parameter.

After the current desktop attribute information of the operating system is acquired, the method may further include that:
whether the current desktop attribute information of the operating system is the same as that of the operating system acquired last time is judged, and, if yes, an original setting of the widget system appearance is kept; otherwise, the current desktop attribute information of the operating system is stored in a pre-configured logfile, the pre-configured matching relationship table is looked up, the parameter of the widget system appearance corresponding to the desktop attribute information are acquired, and the widget system appearance is set based on the parameter.

After the current desktop attribute information of the operating system is acquired, the method may further include that:
the pre-configured matching relationship table is looked up, whether the parameter of the widget system appearance corresponding to the current desktop attribute information of the operating system is the same as the current setting of the parameter of the widget system appearance is judged, and, if yes, the original setting of the widget system appearance is kept; otherwise, the pre-configured matching relationship table is looked up, the parameter of the widget system appearance corresponding to the current desktop attribute information of the operating system is acquired, and the widget system appearance is set based on the parameter.

After the widget system appearance is set based on the parameter, the method may further include that:
a user is prompted whether to accept the current modified setting, and the current modified setting is confirmed when a feedback result of the use is acceptance; or, the original setting is kept when a feedback result of the use is rejection.

When the pre-configured matching relationship table is looked up, and if the parameter of the widget system appearance corresponding to the current desktop attribute information of the operating system is not exist in the matching relationship table, the method may further include that:
a dedicated parameter of the widget system appearance pre-configured in the matching relationship table is called, and the widget system appearance is set based on the parameter.

The operation of acquiring the current desktop attribute information of the operating system is performed when a widget engine is started or a set time is up;
the desktop attribute information may include at least one of the following information: desktop subject, background picture, display resolution, font size, window colour, screen size and transparency; and
the parameter of the widget system appearance may include at least one of the following information: widget engine subject, background picture, display resolution, font size, window colour, screen size and transparency.

A device for processing a widget system appearance is provided, which may include:
a desktop attribute information acquiring unit, which is configured to acquire current desktop attribute information of an operating system, and trigger an appearance setting unit; and
the appearance setting unit, which is configured to, according to a triggering of the desktop attribute information acquiring unit, look up a pre-configured matching relationship table, acquire a parameter of the widget system appearance corresponding to the current desktop attribute information of the operating system, and set the widget system appearance based on the parameter.

The device may further include:
a first desktop attribute information detecting unit, which is configured to detect whether the current desktop attribute information of the operating system is the same as that of the operating system acquired last time, and, if yes, keep an original setting of the widget system appearance; otherwise, store the current desktop attribute information of the operating system acquired by the desktop attribute information acquiring unit in a pre-configured logfile, and trigger the appearance setting unit.

The device may further include:
a second desktop attribute information detecting unit, which is configured to look up the pre-configured matching relationship table, judge whether the parameter of the widget system appearance corresponding to the current desktop attribute information of the operating system is the same as current setting of the parameter of the widget system appearance, and, if yes, keep an original setting of the widget system appearance; otherwise, trigger the appearance setting unit.

The appearance setting unit may be further configured to, after setting the widget system appearance, prompt a user whether to accept current modified setting, and, confirm the current modified setting when a feedback result of the use is acceptance, or keep the original setting when a feedback result of the use is rejection.
When the pre-configured matching relationship table is looked up by the appearance setting unit, and if the parameter of the widget system appearance corresponding to the current desktop attribute information of the operating system is not exist in the matching relationship table, the appearance setting unit may be further configured to:
call a dedicated parameter of the widget system appearance pre-configured in the matching relationship table, and set the widget system appearance based on the parameter.

The operation of acquiring the current desktop attribute information of the operating system by the desktop attribute information acquiring unit is performed when a widget engine is started or a set time is up;
the desktop attribute information may include at least one of the following information: desktop subject, background picture, display resolution, font size, window colour, screen size and transparency; and
the parameter of the widget system appearance may include at least one of the following information: widget engine subject, background picture, display resolution, font size, window colour, screen size and transparency.

Compared with the related art, the beneficial effect of the disclosure is as follows:
by means of the method and the device provided by the disclosure, the widget system appearance is adaptively adjusted according to the desktop attribute information set by the user, so that user experience is greatly improved.

### BRIEF DESCRIPTION OF THE DRAWINGS

Fig. 1 is a flowchart of a method for processing a widget system appearance provided by the disclosure;
Fig. 2 is a flowchart of a method for processing the widget system appearance provided by embodiment 1 of the disclosure;
Fig. 3 is a flowchart of a method for processing the widget system appearance provided by embodiment 2 of the disclosure;
Fig. 4 is a flowchart of a method for processing the widget system appearance provided by embodiment 3 of the disclosure; and
Fig. 5 is a structure diagram of a device for processing a widget system appearance provided by the disclosure.

### DETAILED DESCRIPTION

The technical solution in the embodiments of the disclosure will be clearly and completely described on the basis of the drawings in embodiments of the disclosure. Obviously, the embodiments described are only a part of embodiments of the disclosure but are not all the embodiments of the disclosure. Other embodiment obtained by those skilled in the art on the basis of the embodiments herein without any creative effort belongs to the scope of protection of the disclosure.

To improve the user experience, the disclosure provides a method and a device for processing a widget system appearance, wherein the method, which follows a widget system framework defined by the W3C, JIL and BONDI standards, enables the widget system appearance to be adaptively adjusted according to behaviour information of a user by pre-configuring a matching relationship between a parameter of the widget system appearance and desktop attribute information in an operating system applied by a widget system when the desktop attribute information is changed according to a behaviour and habit of the user.

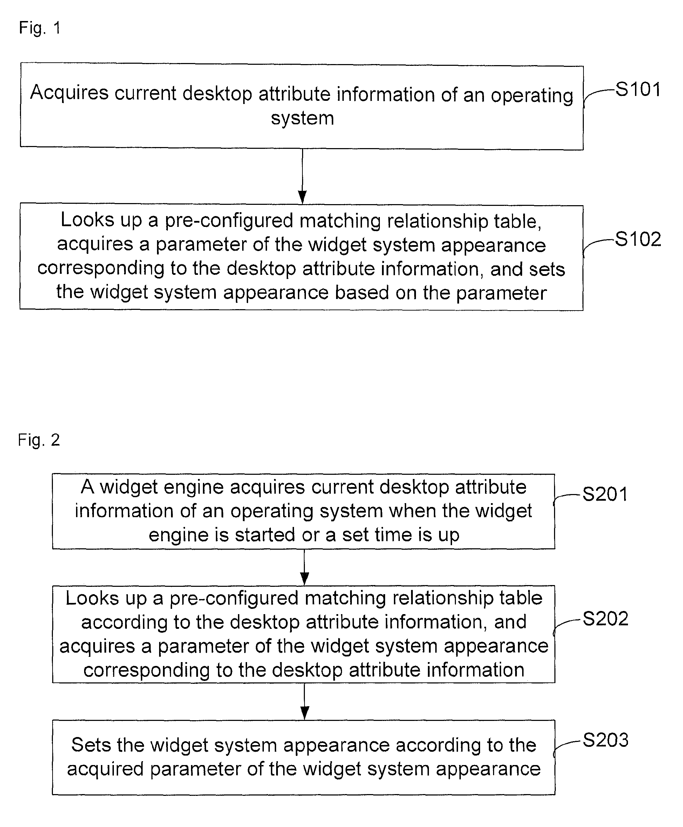

As show in Fig. 1, a method for processing a widget system appearance provided by the disclosure specifically includes that:
step 101: current desktop attribute information of an operating system is acquired; and
step 102: a pre-configured matching relationship table is looked up, a parameter of a widget system appearance corresponding to the current desktop attribute information of the operating system is acquired, and the widget system appearance is set based on the parameter.

The operation of acquiring the current desktop attribute information of the operating system can be performed when a widget engine is started or a set time is up.

The method provided by the disclosure greatly improves the user experience by adaptively adjusting the widget system appearance according to the desktop attribute information set by a user.

Several preferred embodiments are given below according to Figs. 2 to 4, and the technical details of the disclosure are further provided in combination with the descriptions of the embodiments, so that the specific implementation process of the method provided by the disclosure can be better explained.

### Embodiment 1

As shown in Fig. 2, an implementation process of a method for processing a widget system appearance provided by the embodiment of the disclosure, which includes the following steps.
Step 201: a widget engine acquires current desktop attribute information of an operating system when the widget engine is started or a set time is up.

The desktop attribute information includes one or more of the following information: desktop subject, background picture, display resolution, font size, window colour, screen size and transparency and the like.
Step 202: a pre-configured matching relationship table is looked up according to the desktop attribute information, and a parameter of the widget system appearance corresponding to the desktop attribute information is acquired.

The parameter of the widget system appearance includes one or more of the following information: widget engine subject, background picture, display resolution, font size, window colour, screen size and transparency.
Step 203: the widget system appearance is set according to the acquired parameter of the widget system appearance.

Preferably, after this step, a setting indicating operation is executed, which specifically includes that: a user is prompted whether to accept a current modified setting, and, if the user agrees, the setting is confirmed; otherwise, the widget system appearance is kept as original setting.

### Embodiment 2

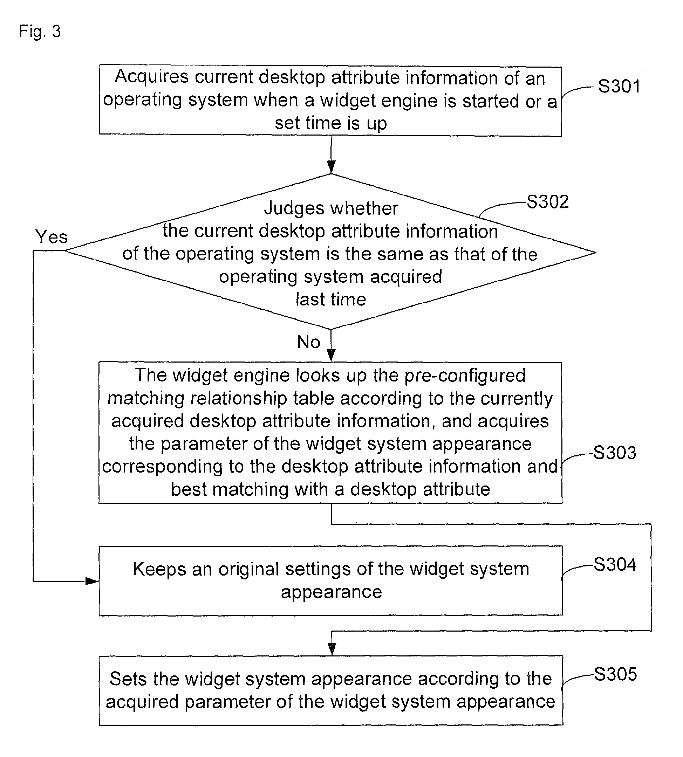

As shown in Fig. 3, an implementation process of a method for processing a widget system appearance provided by the embodiment of the disclosure, which includes the following steps.
Step 301: acquires current desktop attribute information of an operating system when a widget engine is started or a set time is up.

The desktop attribute information includes one or more of the following information: desktop subject, background picture, display resolution, font size, window colour, screen size and transparency and the like currently set by a user.
Step 302: the widget engine judges whether the current desktop attribute information of the operating system is the same as that of the operating system acquired last time, and, if yes, a step 304 is executed; otherwise, a step 303 is executed.

In this step, the way, in which the widget engine judges whether the desktop attribute information acquired last time and the currently acquired desktop attribute information are the same, is preferably but is not limited to the following way.

The widget engine pre-configures a logfile "user Config.xml", and stores the currently acquired desktop attribute information in the logfile as the basis of the next judgement for the widget engine when detecting that the currently acquired desktop attribute information is different from the desktop attribute information acquired last time.

Or,
the widget engine pre-configures a logfile " user Config.xml" including a field <last time user Config> and a field <current Time userConfig>, stores the current desktop attribute information in the field <current Time userConfig> after acquiring the current desktop attribute information, and automatically adjusts the desktop attribute information in the field <current Time userConfig> as the field <last time user Config> when acquiring the desktop attribute information next time.

Therefore, the field <last Time user Config> and the field <current Time userConfig> above are used for storing the desktop attribute information stored last time and the currently stored desktop attribute information respectively, wherein specific formats are as follows.

The field <Last Time User Config> includes:

| | |
|---|---|
| <subject> <subject/> | /*Subject*/ |
| <Background Picture> <Background Picture/> | /*Background Picture*/ |
| <Resolution> <Resolution/> | /*Resolution*/ |
| <Font> <Font/> | /*Font*/ |
| <Window Colour> < Window Colour/> | /*Window Colour*/ |
| <Screen Size> <Screen Size/> | /*Screen Size*/ |
| <Transparency> <Transparency/> | /*Transparency*/ |
| <Last Time User Config/>, and | |
| The field of <CurrentTimeuserConfig> includes: | |
| <subject> <subject/> | /*Subject*/ |
| <Background Picture> <Background Picture/> | /*Background Picture*/ |
| <Resolution> <Resolution/> | /*Resolution*/ |
| <Font> < Font/> | /*Font*/ |
| <Window Colour> < Window Colour/> | /*Window Colour*/ |
| <Screen Size> <Screen Size/> | /*Screen Size*/ |
| <Transparency> <Transparency/> | /*Transparency*/ |
| <currentTimeuserConfig/> | |

Wherein, if the desktop attribute information recorded in the field <current Time user Config> and the field <Last Time User Config> are the same, it is indicated that the user does not modify current desktop setting; otherwise, it is indicated that the user modifies current desktop setting.

The difference of the recorded desktop attribute information includes: the difference caused by that the previously and currently acquired two desktop attribute information are changed due to the modification of the user, and the difference, between the currently acquired desktop attribute information and the information recorded in this field, caused when the widget engine is first started and the field <Last Time User Config> is empty.
Step 303: the widget engine looks up the pre-configured matching relationship table according to the currently acquired desktop attribute information, and acquires the parameter of the widget system appearance corresponding to the desktop attribute information and best matching with a desktop attribute, and a step 305 is executed.

Wherein, the desktop attribute information of the operating system and the parameter of the widget system appearance corresponding to the desktop attribute information are stored in the pre-configured matching relationship table. It should be explained that, because the desktop attribute parameter information in the operating system is usually more than the parameter of the widget system appearance (for example, the desktop subject is more than the widget system appearance subject), therefore the case that one parameter of the widget system appearance corresponds to more pieces of the desktop attribute parameter information in the matching relationship table exists, meanwhile, a dedicated parameter of the widget system appearance is further set in the matching relationship table to be used for setting the widget system appearance as the appearance setting corresponding to the current dedicated parameter of the widget system appearance when the desktop attribute information selected by the user is not in the matching relationship table.

Specifically, the process of looking up the pre-configured matching relationship table and acquiring the parameter of the widget system appearance corresponding to the desktop attribute information and best matching with the desktop attribute in this step is as follows:
(1) Whether a widget subject corresponding to the desktop subject in the current desktop attribute information exists in the matching relationship table is looked up, and, if yes, the subject of the widget system is set as the widget subject corresponding to the desktop subject; otherwise, the pre-configured dedicated subject is set as the widget subject.
(2) Whether a widget background picture corresponding to the background picture and window colour in the current desktop attribute information exists in the matching relationship table is looked up, and, if yes, the corresponding widget background picture is set as the background picture of the widget system; otherwise, a pre-configured dedicated background picture is set as the background picture of the widget system.
(3) the setting way of the widget font and icon sizes corresponding to the display resolution and font size in the current desktop attribute information is looked up in the matching relationship table, and usually, the display resolution is inversely proportional to the font and icon sizes of the widget engine. The font and icon of a widget UA can be identical to the user setting by obtaining the settings of display resolution and font size of the user.
(4) The setting way of the widget engine and application sizes corresponding to the screen size and display resolution in the current desktop attribute information is looked up in the matching relationship table, and usually, the widget engine and application sizes are changed when the display resolution is changed. However, effects are quite different when the widget engine and application of the same size are displayed on screens with different sizes. Therefore, user experience can be better when a certain proportional relationship is kept between the widget engine and application sizes and the screen size. A proportional relationship between the widget engine size and the screen size can be determined beforehand, and the proportional relationship between the widget engine size and the screen size remain constant when the screen and resolution sizes are changed.
(5) Whether animation effects of opening and closing the widget engine and application corresponding to the current desktop subject exist is looked up in the matching relationship table, and, if yes, the corresponding animation effects of opening and closing are set as the animation effects of opening and closing the widget system; otherwise, the pre-configured dedicated animation effects of opening and closing are set as the animation effects of opening and closing the widget engine.

Indeed, after the current desktop attribute information of the operating system is acquired, whether the current desktop attribute information of the operating system is the same as that of the operating system acquired last time can further be judged, and, if yes, an original setting of the widget system appearance is kept; otherwise, the current desktop attribute of the operating system is stored in the field <current Time userConfig> in the pre-configured logfile, the pre-configured matching relationship table is looked up, the parameter of the widget system appearance corresponding to the desktop attribute information is acquired, and the widget system appearance is set based on the parameter.
Step 304: the original setting of the widget system appearance is kept.
Step 305: the widget system appearance is set according to the acquired parameter of the widget system appearance.

Preferably, after this step, a setting indicating operation is executed, which specifically includes that: a user is prompted whether to accept a current modified setting, and, if the user agrees, the setting is confirmed; otherwise, the widget system appearance is kept as original setting.

### Embodiment 3

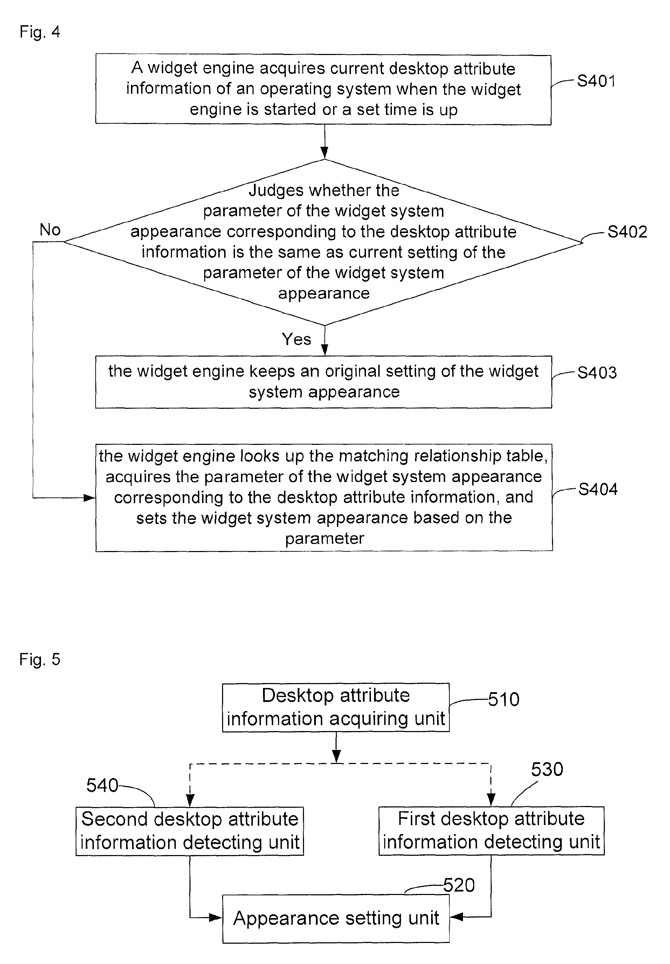

As shown in Fig. 4, an implementation process of a method for processing a widget system appearance provided by the embodiment of the disclosure, which includes the following steps.
Step 401: a widget engine acquires current desktop attribute information of an operating system when the widget engine is started or a set time is up.
Step 402: the widget engine looks up a pre-configured matching relationship table, and judges whether a parameter of the widget system appearance corresponding to the current desktop attribute information of the operating system is the same as a current setting of the parameter of the widget system appearance, and, if yes, a step 403 is executed; otherwise, a step 404 is executed.
Step 403: the widget engine keeps an original setting of the widget system appearance.
Step 404: the widget engine looks up the matching relationship table, acquires the parameter of the widget system appearance corresponding to the desktop attribute information, and sets the widget system appearance based on the parameter.

The specific implementation way of this step is the same as that of the step 303 in embodiment 2, thus will not be described further.

Preferably, after this step, an setting indicating operation is executed, which specifically includes that: a user is prompted whether to accept a current modified setting, and, if the user agrees, the setting is confirmed; otherwise, the widget system appearance is kept as original setting.

The method provided by the disclosure focuses on a blank spot of the W3C standard, starts from the point of improving the user experience, and innovatively uses behaviour information of the user to adaptively adjust the widget system appearance. An existing widget system provides no function of changing the widget system appearance or provides such function but needs a manual operation of a user, which have no adaptive function of the disclosure. From the point of the user, the widget system of the disclosure greatly improves the user experience by adaptively adjusting the widget system appearance according to the habit and behaviour information of the user. Furthermore, this system is simultaneously adapted to the desktop widget and the widget on the mobile terminal device.

The disclosure further provides a device for processing a widget system appearance, as shown in Fig. 5, which includes:
a desktop attribute information acquiring unit 510, which is configured to acquire current desktop attribute information of an operating system when a widget engine is started or a set time is up, and trigger an appearance setting unit 520; and
the appearance setting unit 520, which is configured to, after receiving trigger information from the desktop attribute information acquiring unit 510, look up a pre-configured matching relationship table, acquire a parameter of the widget system appearance corresponding to the current desktop attribute information of the operating system, and set the widget system appearance based on the parameter.

Preferably, the device of the disclosure further includes: a first desktop attribute information detecting unit 530, which is configured to detect whether the current desktop attribute information of the operating system is the same as that of the operating system acquired last time, and, if yes, keep an original setting of the widget system appearance; otherwise, store the current desktop attribute information of the operating system acquired by the desktop attribute information acquiring unit 510 in a pre-configured logfile, and trigger the appearance setting unit 520.

Preferably, the device of the disclosure further includes: a second desktop attribute information detecting unit 540, which is configured to look up the pre-configured matching relationship table, judge whether the parameter of the widget system appearance corresponding to the current desktop attribute information of the operating system is the same as the current setting of the parameter of the widget system appearance, and, if yes, keep an original setting of the widget system appearance; otherwise, trigger the appearance setting unit 520.

Furthermore, the appearance setting unit 520 is further configured to, after setting the widget system appearance, prompt a user whether to accept the current modified setting, and confirm current modified setting when the feedback result of the use is acceptance, or keep the original setting when a feedback result of the use is rejection.

Furthermore, the appearance setting unit 520 is configured to, when looking up the pre-configured matching relationship table, and if the parameter of the widget system appearance corresponding to the current desktop attribute information of the operating system is not exist in the matching relationship table, call a dedicated parameter of the widget system appearance pre-configured in the matching relationship table, and set the widget system appearance based on the parameter.

Obviously, any modification and variation for the disclosure can be made by those skilled in the art within the spirit and scope of the disclosure. In this way, if such modification and variation of the disclosure are in the scope of the claims and equivalent technology thereof, the disclosure is intended to include such modification and variation.

## Claims

1. A method for processing the widget system appearance, comprising:
acquiring current desktop attribute information of an operating system; and
looking up a pre-configured matching relationship table, acquiring a parameter of a widget system appearance corresponding to the current desktop attribute information of the operating system, and setting the widget system appearance based on the parameter.

2. The method according to claim 1, further comprising: after acquiring the current desktop attribute information of the operating system,
judging whether the current desktop attribute information of the operating system is the same as that of the operating system acquired last time, and, if yes, keeping an original setting of the widget system appearance; otherwise, storing the current desktop attribute information of the operating system in a pre-configured logfile, looking up the pre-configured matching relationship table, acquiring the parameter of the widget system appearance corresponding to the desktop attribute information, and setting the widget system appearance based on the parameter.

3. The method according to claim 1, further comprising: after acquiring the current desktop attribute information of the operating system,
looking up the pre-configured matching relationship table, judging whether the parameter of the widget system appearance corresponding to the current desktop attribute information of the operating system is the same as the current setting of the parameter of the widget system appearance, and, if yes, keeping the original setting of the widget system appearance; otherwise, looking up the pre-configured matching relationship table, acquiring the parameter of the widget system appearance corresponding to the current desktop attribute information of the operating system, and setting the widget system appearance based on the parameter.

4. The method according to any one of claims 1 to 3, further comprising: after setting the widget system appearance based on the parameter,
prompting a user whether to accept current modified setting, and confirming the current modified setting when a feedback result of the use is acceptance; or, keeping the original setting when a feedback result of the use is rejection.

5. The method according to any one of claims 1 to 3, wherein
when looking up the pre-configured matching relationship table, if the parameter of the widget system appearance corresponding to the current desktop attribute information of the operating system is not exist in the matching relationship table, the method further comprising:
calling a dedicated parameter of the widget system appearance pre-configured in the matching relationship table, and setting the widget system appearance based on the parameter.

6. The method according to any one of claims 1 to 3, wherein
the operation of acquiring the current desktop attribute information of the operating system is performed when a widget engine is started or a set time is up;
the desktop attribute information comprises at least one of the following information: desktop subject, background picture, display resolution, font size, window colour, screen size and transparency; and
the parameter of the widget system appearance comprises at least one of the following information: widget engine subject, background picture, display resolution, font size, window colour, screen size and transparency.

7. A device for processing a widget system appearance, comprising:
a desktop attribute information acquiring unit, which is configured to acquire current desktop attribute information of the operating system, and trigger an appearance setting unit; and
the appearance setting unit, which is configured to, according to a triggering of the desktop attribute information acquiring unit, look up a pre-configured matching relationship table, acquire a parameter of the widget system appearance corresponding to the current desktop attribute information of the operating system, and set the widget system appearance based on the parameter.

8. The device according to claim 7, further comprising:
a first desktop attribute information detecting unit, which is configured to detect whether the current desktop attribute information of the operating system is the same as that of the operating system acquired last time, and, if yes, keep an original setting of the widget system appearance; otherwise, store the current desktop attribute information of the operating system acquired by the desktop attribute information acquiring unit in a pre-configured logfile, and trigger the appearance setting unit.

9. The device according to claim 7, further comprising:
a second desktop attribute information detecting unit, which is configured to look up the pre-configured matching relationship table, judge whether the parameter of the widget system appearance corresponding to the current desktop attribute information of the operating system is the same as current setting of the parameter of the widget system appearance, and, if yes, keep an original setting of the widget system appearance; otherwise, trigger the appearance setting unit.

10. The device according to any one of claims 7 to 9, wherein
the appearance setting unit is further configured to, after setting the widget system appearance, prompt a user whether to accept current modified setting, and, confirm the current modified setting when a feedback result of the use is acceptance, or keep the original setting when a feedback result of the use is rejection.

11. The device according to any one of claims 7 to 9, wherein
when the pre-configured matching relationship table is looked up by the appearance setting unit, and if the parameter of the widget system appearance corresponding to the current desktop attribute information of the operating system is not exist in the matching relationship table, the appearance setting unit is further configured to:
call a dedicated parameter of the widget system appearance pre-configured in the matching relationship table, and set the widget system appearance based on the parameter.

12. The device according to any one of claims 7 to 9, wherein
the operation of acquiring the current desktop attribute information of the operating system by the desktop attribute information acquiring unit is performed when a widget engine is started or a set time is up;
the desktop attribute information comprises at least one of the following information: desktop subject, background picture, display resolution, font size, window colour, screen size and transparency; and
the parameter of the widget system appearance comprises at least one of the following information: widget engine subject, background picture, display resolution, font size, window colour, screen size and transparency.
